# EUROPÄISCHE PATENTANMELDUNG

(11) **EP 2 143 534 A2**
(43) Veröffentlichungstag der Anmeldung: **13.01.2010**
(21) Anmeldenummer: 09008745.3
(22) Anmeldetag: 03.07.2009
(51) Int. Cl.: B27M 3/06

(54) **Verfahren und Anlage zum Herstellen von Deckschichtdielen**

(30) Priorität: 07.07.2008 DE 102008031604
(71) Anmelder: Robert Bürkle GmbH, 72250 Freudenstadt (DE)
(72) Erfinder: Lücking, Thomas, 33142 Büren-Steinhausen (DE); Melies, Wolfgang, 33397 Rietberg-Mastholte (DE); Marahrens, Volker, 33397 Rietberg-Mastholte (DE); Tölle, Heribert, 33102 Paderborn (DE)
(74) Vertreter: Lemcke, Brommer & Partner

(57) **Zusammenfassung**

Die vorliegende Erfindung betrifft eine Anlage sowie ein Verfahren zum Herstellen von Deckschichtdielen, die jeweils aus mehreren, an ihren Längs- und/oder Stirnseiten aneinandergesetzten und miteinander verleimten Deckschicht-Holzlamellen 16 zusammengesetzt sind. Die Holzlamellen 16 werden in einem Lamellenmagazin 1 bereitgehalten und geordnet auf eine Förderstrecke 1, 2, 3 aufgegeben, in einer Sammelstation 3, 4, 5, 9 zumindest in Längsrichtung lagerichtig aneinanderliegend zu einer Deckschicht-Anordnung 7 zusammengestellt und in einer Presse 11 mittels Druck- und Wärmeeinwirkung miteinander verleimt. Die Presse 11 ist nach einem Aspekt der Erfindung eine kontinuierlich arbeitende Durchlaufpresse. Nach einem anderen Aspekt der Erfindung wird die jeweils vorderste Holzlamelle 16 einer Deckschicht-Anordnung 7 in der Sammelstation 3, 4, 5, 9 an einer Anschlagsvorrichtung 5 angehalten und in definiertem Abstand stromaufwärts der Anschlagsvorrichtung 5 durchgesägt. Erfindungsgemäß wird hierbei die Position des Trennschnitts anhand des Soll-Längenmaßes der durchgesägten Holzlamelle 16 oder anhand der Soll-Längenmaße der für eine Deckschicht-Anordnung zusammengestellten Holzlamellen 16 bestimmt.

## Beschreibung

Die Erfindung betrifft eine Anlage zum Herstellen von Deckschichtdielen nach den Oberbegriffen der Ansprüche 1 und 8 sowie ein entsprechendes Herstellungsverfahren nach dem Oberbegriff des Anspruchs 10. Die mit der vorliegenden Anlage und dem vorliegenden Verfahren herzustellenden Deckschichtdielen sind jeweils aus mehreren, an ihren Längs- und/oder Stirnseiten aneinandergesetzten und miteinander verleimten Deckschicht-Holzlamellen zusammengesetzt und dienen in der Regel als Nutzschicht einer Parkettdiele eines Mehrschichtparketts. Die vorliegende Erfindung ist allerdings nicht auf die Verwendung der hergestellten Deckschichtdielen im Rahmen eines Mehrschichtparketts beschränkt; die Deckschichtdielen können vielmehr auch zum Belegen von Möbelteilen, wie Fronten, Seitenwänden und dergleichen verwendet werden, um eine Echtholz- bzw. Massivholzoberfläche der belegten Möbelteile zu erhalten.

Eine Anlage der vorliegenden Art umfasst zumindest ein Lamellenmagazin zum Bereithalten und geordneten Aufgeben von Holzlamellen auf eine Förderstrecke, eine Sammelstation zum lagerichtig zueinander orientierten Anordnen der für eine Deckschichtdiele vorgesehenen Holzlamellen zu einer Deckschicht-Anordnung und eine Presse, in der die Holzlamellen der Deckschicht-Anordnung mittels Druck- und Wärmeinwirkung miteinander verleimt werden, sowie optional weitere Anlagenkomponenten wie beispielsweise eine oder mehrere Beleimungsstatianen für die Holzlamellen.

In einer solchen Anlage werden die Holzlamellen aus dem Lamellenmagazin entsprechend einem erwünschten Erscheinungsbild der Deckschichtdielen in bestimmter Reihenfolge auf die Förderstrecke gegeben. Hierbei kann insbesondere die Länge der einzelnen Lamellen variiert werden, um ein insgesamt ausgewogenes Bild des später verlegten Parketts oder einer sonstigen Holzoberfläche zu gewährleisten.

In bisher bekannten Anlagen zum Herstellen von Deckschichtdielen werden die Holzlamellen aus dem Lamellenmagazin einer Förderstrecke aufgegeben, auf der eine optionale Stirnverleimung sowie eine Seitenverleimung der innerhalb der Deckschicht-Anordnung zu liegen kommenden Längsseiten und optional der Stirnseiten der Lamellen erfolgt. In einer sich daran anschließenden Sammelstation werden die für eine Deckschichtdiele vorgesehenen Holzlamellen lagerichtig zueinander orientiert, wodurch sich die Deckschicht-Anordnung bildet. Diese wird längs- und querverdichtet, so dass die Holzlamellen an ihren Stirnseiten und Längsseiten aneinanderstoßen, wobei aufgrund der zuvor erfolgten Verleimung zwischen den Holzlamellen jeweils eine Adhäsivstoffschicht angeordnet ist. Diese Deckschicht-Anordnung wird sodann in eine geöffnete Presse eingefahren, die Presse geschlossen und der zwischen den Holzlamellen befindliche Adhäsivstoff unter Druck- und Wärmeinwirkung aktiviert. Nach dem Öffnen der Presse wird die fertige Deckschichtdiele ausgefahren.

Andere bekannte Anlagen bringen Klebebänder oder eine Klebefolie auf die Oberfläche der fertigen Deckschicht-Anordnung auf, die ebenfalls in einer Presse aktiviert werden. Das Beleimen der Stirn- und Seitenflächen der Holzlamellen entfällt hierdurch.

Um die Nachteile zu vermeiden, die sich durch das taktweise Prozessieren der Deckschicht-Anordnungen in der Presse der bekannten Anlagen ergeben, sind ferner Anlagen bekannt, bei denen die Presse durch eine Infrarot-Einrichtung ersetzt wird. Durch diese werden die Deckschicht-Anordnungen kontinuierlich hindurchgeleitet, wobei der in den Fugen zwischen den einzelnen Holzlamellen befindliche Adhäsivstoff jeweils durch die infrarotstrahlung aktiviert wird. Dies birgt allerdings die Nachteile, dass die Oberfläche der Deckschicht-Anordnung beim Aktivieren des Adhäsivstoffs nicht horizontal ausgerichtet bzw. gepresst wird, was die Ebenheit der späteren Deckschichtdiele beeinträchtigen kann, sowie dass durch die Infrarotstrahlung oft Verfärbungen der Lamellenkanten entstehen können.

Ausgehend von diesem Stand der Technik besteht daher eine der vorliegenden Erfindung zugrundeliegende Aufgabe darin, eine Anlage der eingangs genannten Art hinsichtlich der genannten Nachteile zu verbessern.

Ein weiteres Problem bei bekannten Anlagen der eingangs genannten Art betrifft das Gewährleisten einer vorgegebenen Länge der Deckschichtdielen, das durch eine Sägeeinrichtung in der Sammelstation erfolgt. Die Holzlamellen laufen üblicherweise in der Sammelstation gegen einen Anschlag, der in einem Abstand stromabwärts einer Sägeeinrichtung angebracht ist, die der Länge der fertigen Deckschichtdiele entspricht. Da die Holzlamellen normalerweise zuvor bereits stirnseitig beleimt worden sind, soll der Sägeschnitt immer innerhalb einer Holzlamelle liegen, so dass deren frisch gesägte Schnittkanten unbeleimte Stirnseiten der Deckschicht-Anordnung bilden.

Eine Deckschichtdiele besteht jedoch in der Regel aus mehreren Streifen von stirnseitig aneinandergesetzten Holzlamellen, wobei mehrere, typischerweise sechs bis sieben stirnseitig aneinandergesetzte Holzlamellen einen Streifen bilden. Das Fahren gegen einen Anschlag und das Setzen des Sägeschnitts im definierten Abstand vom Anschlag, der der Länge der Deckschichtdielen entspricht, stellt eine Messung der Ist-Gesamtlänge der Holzlamellen-Streifen dar. Holzlamellen weisen aufgrund ihrer Materialeigenschaften im allgemeinen jedoch relativ große Toleranzen auf, insbesondere in Längsrichtung, so dass es vorkommen kann, dass im ungünstigsten Fall eine ganze Reihe von Holzlamellen mit Untermaß aneinandergesetzt werden. Im Laufe der Produktion verschiebt sich dann die Position des Sägeschnitts immer mehr in Richtung einer Trennfuge zwischen zwei Holzlamellen, so dass der Sägeschnitt einer Trennfuge so nahe kommen kann, dass das durch das Absägen entstehende kurze Lamellenstück außerhalb der für das Endprodukt zulässigen Maße liegt und eine Kreuzfuge entsteht, weil die Länge des Holzlamellen-Reststücks kleiner ist als dessen Breite.

Eine weitere Aufgabe der vorliegenden Erfindung besteht daher darin, eine Anlage sowie ein Verfahren der eingangs genannten Art vorzuschlagen, mit denen diese Problematik vermieden wird.

Gelöst sind diese Aufgaben durch eine Anlage mit den Merkmalen des Anspruchs 1, eine Anlage mit den Merkmalen des Anspruchs 8 sowie ein Verfahren mit den Merkmalen des Anspruchs 10. Bevorzugte Ausgestaltungen der erfindungsgemäßen Anlage ergeben sich aus den Ansprüchen 2 bis 7 und 9; vorteilhafte Weiterbildungen des erfindungsgemäßen Verfahrens sind in den Ansprüchen 11 bis 15 niedergelegt.

Die erfindungsgemäße Anlage mit den Merkmalen des Anspruchs 1 unterscheidet sich vom Stand der Technik also dadurch, dass die in der Anlage befindliche, die Deckschicht-Anordnung mittels Druck- und Wärmeinwirkung miteinander verleimende Presse eine kontinuierlich arbeitende Durchlaufpresse ist. Gegenüber den herkömmlicherweise verwendeten Pressen ergibt sich hieraus der große Vorteil, dass die Deckschicht-Anordnungen nicht mehr in spezielle Beschickungsvorrichtungen der Presse verbracht und aus diesen entnommen werden müssen, sondern mittels einfacher Fördervorrichtungen von der Sammelstation in die Presse gelangen und von der Presse selbst weitergefördert werden können. Ferner entfällt die Notwendigkeit eines taktweisen Arbeitens, bei welchem der Arbeitstakt der Presse die Arbeitsweise der gesamten Anlage vorgibt. Schließlich ist auch die Führung der Prozesswärme in einer kontinuierlich arbeitenden Durchlaufpresse einfacher als in einer taktweise arbeitenden konventionellen Presse. Gleichwohl ist eine Presse in der Anlage vorhanden, um die Adhäsivstoffe in der Deckschicht-Anordnung zu aktivieren. Die Vorteile, die sich durch die Aktivierung der Adhäsivstoffe in einer Presse ergeben, werden also nicht wie im Stand der Technik, bei dem die Adhäsivstoffe mittels Infrarotstrahlung aktiviert werden, aufgegeben.

Weitere Vorteile ergeben sich, wenn die erfindungsgemäß kontinuierlich arbeitende Durchlaufpresse induktiv beheizbare Wärmeübertragungsmittel zum Einbringen der Prozesswärme in die Deckschicht-Anordnung aufweist. Denn dies ermöglicht eine sehr exakte und berührungslose Regelung der Prozesswärme, gegebenenfalls auch mit einem vorgegebenen Wärmegradienten innerhalb der Presse. Daneben sind auch andere berührungslos zu regelnde Wärmequellen denkbar, wie beispielsweise Mikrowellenstrahlung.

Die Presse weist vorzugsweise zwei umlaufende Förderelemente auf, die oberhalb und unterhalb eines Förderweges angeordnet sind und die Deckschicht-Anordnungen zwischen sich aufnehmen. Diese Förderelemente können beispielsweise Ketten von gelenkig miteinander verbundenen Platten oder Metallbänder sein. Besonders vorteilhaft ist dies, wenn mit der bevorzugten induktiven Heizung oder auch einer Mikrowellenheizung der Wärmeübertragungsmittel gearbeitet wird; denn in diesem Fall müssen lediglich die Platten der Plattenkette bzw. die Metallbänder beheizt werden. Durch den direkten Kontakt der Platten bzw. Metallbänder mit den hindurchgeführten Deckschicht-Anordnungen wird die induktiv in die Platten bzw. Metallbänder eingebrachte Prozesswärme mittels direktem Kontakt in die Deckschicht-Anordnungen eingeleitet. Hierzu ist vorteilhafterweise vorgesehen, dass die Förderelemente der Presse induktiv beheizbar sind.

Die kontinuierlich arbeitende Durchlaufpresse ist vorzugsweise mit seitlichen, vertikal angeordneten Rollen oder Gleitelementen zur seitlichen Führung der in der Presse prozessierten Deckschicht-Anordnungen versehen. Dies gewährleistet, dass die Deckschicht-Anordnungen in der Presse querverdichtet angeordnet bleiben, wenn die Adhäsivstoffe zwischen den einzelnen Holzlamellen aktiviert, insbesondere erweicht werden, und stellt so sicher, dass die Verbindung zwischen den Holzlamellen zuverlässig und dauerhaft erfolgt.

Die Sammelstation der erfindungsgemäß mit einer kontinuierlich arbeitenden Durchlaufpresse versehenen Anlage kann als Zusammenführungsvorrichtung ausgebildet sein, die mit einer Anzahl von seitlich rechts und links der Deckschicht-Anordnung im Wesentlichen trichterförmig angeordneten, aktivierbaren Vertikalrollen oder Vertikal-Gleitelementen zur Querverdichtung der Holzlamellen der Deckschicht-Anordnung versehen ist. Die Vertikalrollen oder Vertikal-Gleitelemente können hierbei alle oder nur zum Teil, einzeln und/oder in Gruppen aktivierbar sein, also Bedarfsweise aus einer aktiven Stellung in eine passive Stellung herausgefahren werden oder umgekehrt.

Wenn die Deckschicht-Anordnung vor dem Eintritt in die Presse auch noch einer Längsverdichtung bedarf, ist es bevorzugt, wenn die Zuführungsvorrichtung außerdem angetriebene Fördermittel, beispielsweise eine Nockenkette zum Längsverdichten der Deckschicht-Anordnung aufweist, wobei die trichterförmige Anordnung der Vertikalrollen oder Vertikalgleitelemente für den erforderlichen Widerstand gegen die angetriebenen Fördermittel sorgt. "Trichterförmig" soll hierbei aussagen, dass die Vertikalrollen oder Vertikal-Gleitelemente in geraden, gebogenen oder kurvigen Linien hintereinander angeordnet sind, die im Mittel entlang der Längsachse der Zusammenführungsvorrichtung aufeinander zulaufen.

Für eine exakte Nivellierung der Oberflächen der Deckschicht-Anordnungen zu einer Bezugsseite sowie gegebenenfalls zum Verhindern einer Aufwölbung der Deckschicht-Anordnungen während deren Querverdichtung können außerdem Horizontalrollen oder Horizontalgleitelemente in der Zusammenführungsvorrichtung vorgesehen sein.

Zweckmäßigerweise ist eine solche Zusammenführungsvorrichtung der Presse unmittelbar vorgeschaltet, so dass die in der Zusammenführungsvorrichtung querverdichteten und gegebenenfalls längsverdichteten sowie oberflächennivellierten Deckschicht-Anordnungen direkt in die Durchlaufpresse gelangen und dort zu fertigen Deckschichtdielen weiterverarbeitet werden.

Die im Anspruch 8 definierte erfindungsgemäße Anlage zum Herstellen von Parkett-Deckschichtdielen unterscheidet sich vom bisherigen Stand der Technik dadurch, dass die Sammelstation eine Anschlagsvorrichtung zum Stoppen der auf der Förderstrecke angeförderten Holzlamellen sowie eine in vorbestimmtem Abstand stromaufwärts der Anschlagsvorrichtung angeordnete Sägeeinrichtung zum Durchsägen der zuvorderst an der Anschlagsvorrichtung anliegenden Holzlamellen einer Deckschichtanordnung aufweist.

Es handelt sich also um eine alternative Ausbildung der Sammelstation gegenüber der zuvor beschriebenen Zusammenführungsvorrichtung. Hierbei gibt es aber nicht ein Entweder-Oder, sondern die Sammelstation mit Anschlagsvorrichtung kann zusätzlich zur Zusammenführungsvorrichtung eingesetzt werden, beispielsweise indem in der Sammelstation mit Anschlagsvorrichtung die Längsverdichtung der für eine Deckschicht-Anordnung vorgesehenen Holzlamellen erfolgt, während in einer nachgeschalteten Zusammenführungsvorrichtung die Querverdichtung von bereits fertig längsverdichtet angeförderten Holzlamellen-Strängen erfolgt. Dies bietet dann den Vorteil, dass vor der Sammelstation zur Längsverdichtung lediglich die Stirnseitenbeleimung der Holzlamellen erfolgen muss, während die Seitenflächenbeleimung zwischen der Sammelstation mit Anschlagsvorrichtung und der Zusammenführungsvorrichtung erfolgen kann.

Die Sammelstation mit Anschlagsvorrichtung ermöglicht nun die Durchführung des im Anspruch 10 definierten erfindungsgemäßen Verfahrens:

Durch die Anschlagsvorrichtung werden die Holzlamellen in der Sammelstation in Längsrichtung lagerichtig aneinanderliegend zu einer Deckschicht-Anordnung zusammengestellt, die beispielsweise einen Längsstreifen einer Deckschichtdiele darstellt, oder auch die komplette Deckschichtdiele bilden kann.

Da die Holzlamellen normalerweise bereits stirnseitig beleimt in der Sammelstation ankommen, ist es üblich, jeweils eine Holzlamelle durchzusägen, wobei der stromabwärts des Trennschnitts liegende, abgetrennte Teil der Holzlamelle der vorangehenden Deckschicht-Anordnung zugeschlagen wird und der stromaufwärts des Trennschnitts liegende, abgesägte Teil der Holzlamelle die Stirnseite der nachfolgenden Deckschicht-Anordnung bildet. Somit sind sowohl die vordere als auch die hintere Stirnseite der gesamten Deckschicht-Anordnung frei von Adhäsivstoffen und können dementsprechend die Stirnseiten der fertigen Deckschichtdielen bilden. Aber auch dann, wenn vor der Sammelstelle keine stirnseitige Beleimung der Holzlamellen erfolgt, kann das Setzen eines solchen Trennschnitts in jeweils eine Holzlamelle, die dann auf zwei Deckschicht-Anordnungen aufgeteilt wird, vorteilhaft sein.

Die Position des Trennschnitts kann vorzugsweise durch ein Verstellen der Sageeinrichtung und/oder der Anschlagsvorrichtung verändert werden. Eine feste Einstellung dieses Abstands, beispielsweise auf die Hälfte des Soll-Längenmaßes desjenigen Holzlamellentyps, der für die Anfangs- und Endposition in einer Deckschichtdiele vorgesehen ist, ist je nach Produktionsweise allerdings auch möglich und von der vorliegenden Erfindung umfasst. Die erfindungsgemäßen Vorteile gegenüber dem Stand der Technik ergeben sich jedenfalls insbesondere dadurch, dass die Position des Trennschnitts, die durch den eben angesprochenen Abstand zwischen der Sägeeinrichtung und der Anschlagsvorrichtung festgelegt wird, anhand des Soll-Längenmaßes der durchgesägten Holzlamelle bzw. anhand der Soll-Längenmaße der für eine Deckschicht-Anordnung zusammengestellten Holzlamellen bestimmt wird:

Für eine Soll-Länge der Deckschichtdiele von beispielsweise 2.200 mm werden beispielsweise Holzlamellen mit den Soll-Längenmaßen 250 mm, 300 mm, 400 mm und 450 mm zusammengestellt, wobei die Position des Trennschnitts beispielsweise auf 200 mm stromaufwärts der Anschlagsvorrichtung festgelegt wird. Es wird dann davon ausgegangen, dass 200 mm dieser Holzlamelle der vorangegangenen Deckschicht-Anordnung zugeschlagen werden, wobei 250 mm dieser Holzlamelle bei der nächstfolgenden Deckschicht-Anordnung verbleiben. Toleranzen in den Soll-Längenmaßen der Holzlamellen bleiben unberücksichtigt. Falls sich mehrere Holzlamellen in einer Deckschicht-Anordnung treffen, die überwiegend Ist-Längenmaße aufweisen, die unter den Soll-Längemaßen liegen, hat auch die gesamte Deckschicht-Anordnung Untermaß. Dies beeinflusst jedoch die nachfolgende Deckschicht-Anordnung nicht. Im bisherigen Stand der Technik ist dies anders, da dort die Holzlamellen in der Längs-Sammelstation gegen einen Anschlag gefahren, dann die Gesamtlänge der Deckschicht-Anordnung gemessen und anhand dieses Ist-Maßes der Trennschnitt gesetzt wird. Untermaße oder Übermaße von Holzlamellen, die sich nicht statistisch ausmitteln, sondern gegebenenfalls aufaddieren, führen dann dazu, dass die Position des Trennschnitts von Deckschicht-Anordnung zu Deckschicht-Anordnung auf der zu sägenden Holzlamelle "wandert" und irgendwann zu einer Kreuzfuge oder einer Fehlfunktion führt.

Aus diesem Vergleich mit dem bisherigen Stand der Technik lässt sich auch ein weiterer Vorteil der erfindungsgemäßen Verfahrensweise erkennen, namlich der Entfall einer bislang notwendigen Messvorrichtung zur Messung der Ist-Länge der Deckschicht-Anordnung in der Sammelstation.

Die erfindungsgemäße Verfahrensweise wird vorzugsweise so umgesetzt, dass zur Bestimmung der Position des Trennschnitts die Soll-Längenmaße derjenigen Holzlamellen, die nicht gesägt werden, sowie das Soll-Längenmaß des Reststücks der vordersten Holzlamelle zusammengerechnet werden und ein Soll-Längenmaß des abgesägten Stücks der vordersten Holzlamelle der nachfolgenden Deckschicht-Anordnung festgelegt wird, das der Differenz zum Soll-Längenmaß der Deckschicht-Anordnung entspricht. Diese Bestimmung der Position des Trennschnitts erfolgt dabei in der Regel durch Verändern des Abstandes zwischen der Sägeeinrichtung und der Anschlagsvorrichtung; dies kann gegebenenfalls aber auch durch entsprechendes Zusammenstellen der nacheinander auf die Förderstrecke und in die Sammelstation gegebenen Holzlamellen erfolgen, auch ohne den Abstand zu verändern.

Als weitere bevorzugte Ausgestaltung des erfindungsgemäßen Verfahrens und der erfindungsgemäßen Anlage wird zwischen der jeweils vordersten zu sägenden Holzlamelle einer nachfolgenden Deckschicht-Anordnung und der letzten Holzlamelle der vorangehenden Deckschicht-Anordnung eine Lücke erzeugt, beispielsweise mittels einer Pufferstrecke, in der eine Lücke erzeugt oder beibehalten oder geregelt wird, oder es werden zwischen allen Holzlamellen Lücken gelassen, so dass die vorderste zu sägende Holzlamelle der nachfolgenden Deckschicht-Anordnung nicht vor Ablauf einer Zeitdauer an der vor ihr transportierten Holzlamelle anstößt, in der der Sägevorgang abgeschlossen ist. Diese Lücke oder die aufaddierten Lücken geben dem erfindungsgemäßen Verfahren die Zeit, die es braucht, um die für das Durchsägen vorgesehene Holzlamelle durchzutrennen, und die an der Sägeeinrichtung anstehende Deckschicht-Anordnung weiterzutransportieren, bevor die nächste zu sägende Holzlamelle ankommt.

Besonders bevorzugt ist es, wenn die Holzlamellen aus dem Lamellenmagazin der Förderstrecke von vornherein mit zwischenliegenden Lücken aufgegeben werden. Dies erleichtert die Arbeit der eben genannten Pufferstrecke, da die bevorzugte Lücke zwischen den einzeinen Gruppen von Holzlamellen, die jeweils für eine Deckschicht-Anordnung vorgesehen sind, nicht mehr erzeugt, sondern lediglich beibehalten oder geregelt werden muss.

Wie bereits erwähnt, ist es im Rahmen des erfindungsgemäßen Verfahrens bevorzugt, dass die Holzlamellen einer Deckschicht-Anordnung in der mit einer Anschlagsvorrichtung versehenen Sammelstation stirnseitig aneinanderliegend, jedoch seitlich voneinander beabstandet bearbeitet werden. Es handelt sich bei dieser Sammelstation also um eine lediglich längsverdichtende Sammelstation. Nach einer anschließenden seitlichen Beleimung werden die in Strangform vorliegenden Deckschicht-Anordnungen in einer querverdichtenden zweiten Sammelstation, nämlich der Zusammenführungsvorrichtung, zusammengeführt, um sie dann in fertiger Deckschichtdielen-Anordnung der Presse zuzuführen. Da das von der durchgesägten Holzlamelle abgesägte Stück noch der vorangehenden Deckschicht-Anordnung zugeschlagen wird, muss an dieser Stelle die Lücke, die dieses abgesägte Holzlamellen-Stück von der vorangehenden Deckschicht-Anordnung trennt, zugefahren werden. Dies kann dadurch geschehen, dass die vorangehende Deckschicht-Anordnung angehalten wird, bis das abgesägte Lamellenstück ankommt, oder aber das abgesägte Lamellenstück wird mit erhöhter Geschwindigkeit, beispielsweise mittels einer Nockenkette, gefördert. Dies bietet dann auch Vorteile in der Zusammenführungsvorrichtung, da dann die Deckschichtdielen-Anordnung beschleunigt transportiert ankommt und zwischen den trichterförmig angeordneten Vertikalrollen oder Vertikalgleitelementen zur Erzeugung einer Längsverdichtung abgebremst werden.

Das Auftrennen der Längsverdichtung der Holzlamellen und der Querverdichtung der Holzlamellen einer Deckschichtdiele in zwei Sammelstationen ermöglicht auch das Auftrennen der Stirnseitenbeleimung und der Seitenflächenbeleimung der Holzlamellen in zwei Beleimungsstationen, wobei die Holzlamellen trotzdem in einer durchgehenden Fertigungslinie bearbeitet werden können. In der Zusammenführungsvorrichtung können die Holzlamellen einer Deckschicht-Anordnung selbstverständlich auch zusätzlich längsverdichtet und gegebenenfalls auch horizontal ausgerichtet, also nivelliert werden.

Schließlich ist es bevorzugt, dass die Deckschicht-Anordnungen letztendlich in einer kontinuierlich arbeitenden Durchlaufpresse mit Druck und Warme beaufschlagt werden, um die Holzlamellen miteinander zu verleimen. Die Vorteile einer solchen kontinuierlich arbeitenden Durchlaufpresse sind bereits oben beschrieben worden.

Ein Ausführungsbeispiel für eine erfindungsgemäße Anlage sowie ein Beispiel für die Anwendung des erfindungsgemäßen Verfahrens sind im Folgenden anhand der beigefügten Zeichnungen näher beschrieben und erläutert. Es zeigen:
- Figur 1: ein Ausführungsbeispiel für eine erfindungsgemäß ausgestattete Anlage;
- Figur 2: ein Beispiel für die erfindungsgemäße Verfahrensweise in der Sammelstation der Anlage aus Figur 1.

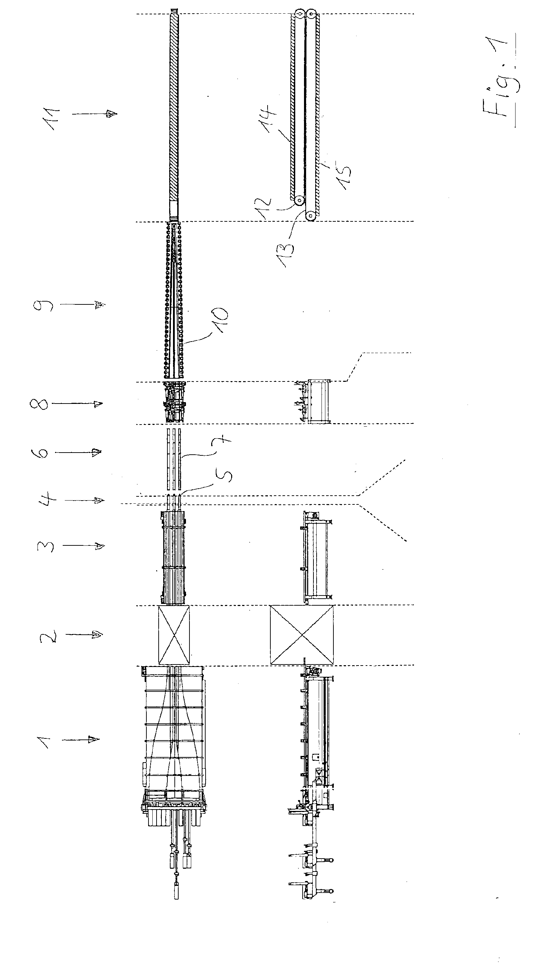

Die in Figur 1 oben in Draufsicht und unten in einer seitlichen Ansicht schematisch dargestellte Anlage umfasst ein Lamellenmagazin 1 mit einer gegenüber dem Stand der Technik vergrößerten Förderstrecke, um die Zuführung von Holzlamellen mit Lücken zu ermöglichen, einer Stirnverleimungsvorrichtung 2, einer Pufferstrecke 3 zur Erzeugung bzw. Beibehaltung einer Lücke oder einer Summe von Lücken, die auf die Dauer eines Trennschnitts in einer Sägeeinrichtung 4 abgestimmt ist, der eben genannten Sägeeinrichtung 4 zum Durchsägen von an einer Anschlagsvorrichtung 5 anliegenden Holzlamellen, einer Schubeinrichtung 6 zum geschobenen und damit die an der Anschlagsvorrichtung 5 erzeugte Längsverdichtung der Holzlamellen nicht wieder auflösenden Fördern von an der Anschlagsvorrichtung 5 gebildeten Deckschicht-Anordnungen 7 über eine Längsseitenverleimung 8 in eine Zusammenführungsvorrichtung 9, wo sie mittels zweier aufeinander zulaufender Reihen von Vertikalrollen 10 querverdichtet werden, sowie einer Durchlaufpresse 11, die aus einer oben umlaufenden Plattenkette 12 und einer unten umlaufenden Plattenkette 13 besteht, wobei den Platten der Plattenketten 12, 13 jeweils induktive Heizvorrichtungen 14(14 ist optional) und 15 zugeordnet sind. Die einzelnen Platten der Plattenketten 12, 13 weisen geringe Abmessungen auf, um eine möglichst flexible Kette zu bilden, und es sind (nicht dargestellte) seitliche Rolien zur seitlichen Führung der in der Durchlaufpresse 11 prozessierten Deckschicht-Anordnungen 7 vorhanden.

Die genannten Elemente der dargestellten Anlage sind in Linie hintereinander angeordnet, wobei auch eine Winkel- oder U-Form möglich ist, je nachdem wie die Stirnseitenverleimung ausgebildet wird. Die Anlage dient einer kontinuierlichen Fertigung der Deckschichtdielen mit einer beispielhaft angegebenen Geschwindigkeit von 45 m/min. Die Holzlamellen werden vom Lamellenmagazin 1 in einer Geschwindigkeit von beispielsweise 135 m/min so voneinander beabstandet eingeschossen, dass die erfindungsgemäß bevorzugt vorhandenen Lücken zwischen den Holzlamellen gebildet werden. Der Trennschnitt der Sägeeinrichtung 4 dauert beispielsweise 2,7 sek., so dass eine zusätzliche Lückenbildung in der Pufferstrecke 3 nicht notwendig ist.

Die Pufferstrecke 3 bildet zusammen mit der Anschlagsvorrichtung 5 eine erste Sammelstation zur Längsverdichtung von drei Strängen mit stirnseitig aneinanderliegenden Holzlamellen, die zuvor in der Stirnverleimungsvorrichtung 2 mit Adhäsivstoff an den Stirnseiten versehen worden sind. Die Querverdichtung der drei Stränge erfolgt in der Zusammenführungsvorrichtung 9, die demgemäß eine zweite Sammelstation darstellt. Die Querverdichtung wird in der Zusammenführungsvorrichtung 9 durch die zwei aufeinander zulaufenden Reihen von Vertikalrollen 10 gewährleistet, wobei zusätzlich Fördervorrichtungen vorhanden sind, die die Deckschicht-Anordnungen 7 mit höherer Geschwindigkeit in die Zusammenführungsvorrichtung 9 einschieben, als sie von der Durchlaufpresse übernommen werden, so dass eine zusätzliche Längsverdichtung sicherheitshalber gegeben ist. Schließlich weist die Zusammenführungsvorrichtung 9 (nicht dargestellte) Horizontalrollen auf, die die Oberfläche der Deckschicht-Anordnungen 7 beim Querverdichten eben ausrichten, um etwaige Aufwölbungen zu vermeiden.

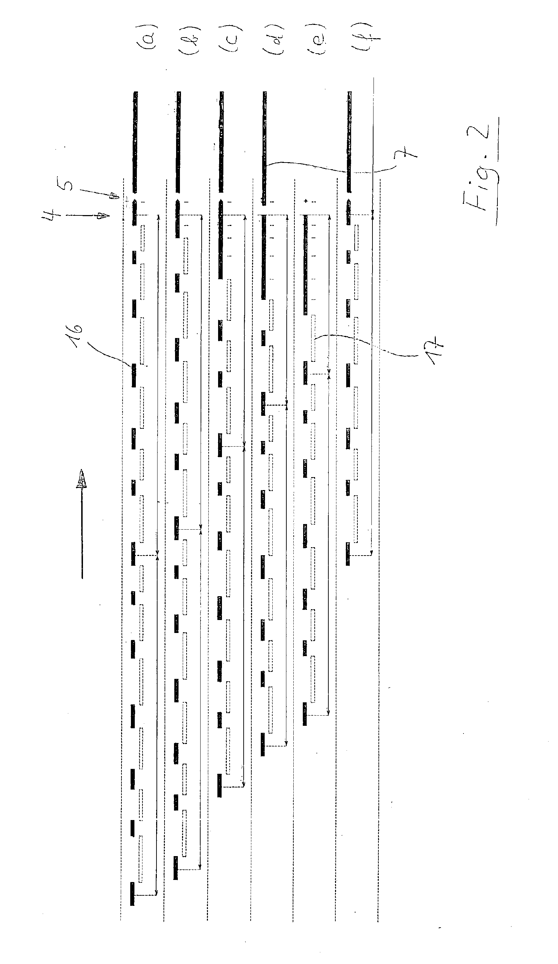

Die Arbeitsweise der in Figur 1 dargestellten Pufferstrecke 3, der Sägeeinrichtung 4 und der Anschlagsvorrichtung 5 wird anhand Figur 2 erläutert:

Figur 2 stellt eine schematische Draufsicht auf eine Anzahl von Holzlamellen 16 in sechs aufeinanderfolgenden Zeitpunkten dar, die in der durch die Pufferstrecke 3, die Sägeeinrichtung 4 und die Anschlagsvorrichtung 5 gebildeten (Längs-)Sammelstation bearbeitet werden. Die Draufsicht (a) zeigt einen ersten Zeitpunkt, in dem jeweils eine Holzlamelle 16 mit 250 mm, eine Holzlamelle mit 300 mm, eine Holzlamelle mit 400 mm und eine Holzlamelle mit 450 mm Soll-Längenmaß eine Deckschicht-Anordnung 7 bilden sollen. Diese weist eine Länge auf, die dem Soll-Längenmaß der Deckschichtdielen von in diesem Beispiel 2200 mm entspricht. Mit "Deckschicht 0" ist dabei eine erste Deckschicht-Anordnung 7, mit "Deckschicht 1" eine zweite Deckschicht-Anordnung und mit "Deckschicht 2" eine dritte Deckschicht-Anordnung bezeichnet. Wie sich daraus ergibt, wird jeweils eine Holzlamelle 16, nämlich die Längste mit 450 mm Soll-Längenmaß, in der Sägeeinrichtung 4 durchgesägt. Der stromabwärts der Sägeeinrichtung 4 liegende, abgetrennte Teil dieser Holzlamelle 16 wird der zuvor hergestellten Deckschicht-Anordnung (Deckschicht 0) zugeschlagen, während der stromaufwärts der Sägeeinrichtung 4 verbleibende Teil dieser Holzlamelle 16 bei der nachfolgenden Deckschicht-Anordnung (Deckschicht 1) verbleibt.

Im Schritt (a) ist die Anschlagvorrichtung 5 in den Bewegungsweg der Holzlamellen 16 eingefahren, und die vorderste Holzlamelle 16 einer Deckschicht-Anordnung (Deckschicht 1) liegt an der Anschlagsvorrichtung 5 an. Diese wird nun sowohl stromaufwärts als auch stromabwärts der Sägeeinrichtung 4 geklemmt, während zum Zeitpunkt (b) weitere Holzlamellen dieser Deckschicht-Anordnung (Deckschicht 1) in die Sammelstation einlaufen. Im Zeitpunkt (c) wird der Trennschnitt gesetzt, wonach im Zeitpunkt (d) die stromabwärts der Sägeeinrichtung 4 liegende Klemmung geöffnet und das abgesägte Stück der Holzlamelle 16 an die zuvor hergestellte Deckschicht-Anordnung 7 (Deckschicht 0) angesetzt wird.

Im Zeitpunkt (e) sind sämtliche Holzlamellen 16 der Deckschicht-Anordnung (Deckschicht 1), die nicht durchgesägt werden sollen, angekommen, während die nächste zu sägende Holzlamelle 16 mit einer Lücke 17 ankommt. Zu diesem Zeitpunkt wird auch die zweite Klemmung an der Sägeeinrichtung 4 geöffnet und die Anschlagsvorrichtung 5 aus dem Förderweg der Holzlamellen 16 herausgenommen, so dass die Deckschicht-Anordnung (Deckschicht 1) über die Sägeeinrichtung 4 und die Anschlagsvorrichtung 5 hinaus bewegt werden kann. Nach einem Wiedereinbringen der Anschlagsvorrichtung 5 in den Förderweg der Holzlamellen 16 läuft die vorderste Holzlamelle 16 der nächsten Deckschicht-Anordnung (Deckschicht 2) gegen die Anschlagsvorrichtung 5, wie die Zeichnung des Zeitpunkts (f) zeigt. Es ergibt sich die gleiche Konstellation wie im Zeitpunkt (a), so dass ein Verfahrenszyklus beendet ist.

Dadurch, dass der Abstand zwischen der Sägeeinrichtung 4 und der Anschlagsvorrichtung 5 auf das Sollmaß der jeweils zu sägenden längsten Holzlamelle 16 abgestimmt ist, beeinflusst ein etwaiges Untermaß oder ein etwaiges Übermaß einer gesamten Deckschicht-Anordnung die Position des Trennschnitts relativ zu der zu sägenden Holzlamelle 16 nicht.

Der Abstand zwischen der Sägeeinrichtung 4 und der Anschlagsvorrichtung 5 wird im vorliegenden Ausführungsbeispiel einer erfindungsgemäße Anlage für jede Deckschicht-Anordnung anhand der verwendeten Holzlamellen neu errechnet, wie das folgende Beispiel illustriert:

Die Deckschichtdiele 0 hat ein Sollmaß von 2200mm, sie wird gebildet aus Holzlamellen mit den Maßen: 400+400+400+300+200+500=2600, jeweils in Millimetern. Dementsprechend muss die Holzlamelle mit der Länge 500mm in zwei Teile von 100mm und 400mm (abzüglich 3mm für den Sägeschnitt) aufgeteilt werden. Die nächste Deckschichtdiele 1 wird gebildet aus Holzlamellen mit den Maßen: 397+400+400+350+200+200+400=2347, jeweils in Millimetern. Dementsprechend muss die Holzlamelle mit der Länge 400mm in zwei Teile der Längen 253mm und 147mm (abzüglich 3mm für den Sägeschnitt) aufgeteilt werden. Die nachfolgende Deckschichtdiele 2 wird demnach gebildet aus Holzlamellen mit den Längen 144+... und so weiter.

Das erfindungsgemäße Verfahren lässt demnach einen "Endlosbetrieb" einer erfindungsgemäßen Anlage mit beliebigen Eingangslängen zu, ohne Abfall- oder Reststücke zu produzieren. Gleichwohl genügt das Arbeitsergebnis den Kriterien "Vermeiden von Kreuzfugen" und "Einhalten von Mindestanfangs- und Mindestendlängen".

## Patentansprüche

1. Anlage zum Herstellen von Deckschichtdielen, die jeweils aus mehreren, an ihren Längs- und/oder Stirnseiten aneinandergesetzten und miteinander verleimten Deckschicht-Holzlamellen (16) zusammengesetzt sind, mit einem Lamellenmagazin (1) zum Bereithalten und geordneten Aufgeben von Holzlamellen (16) auf eine Förderstrecke (1, 2, 3), einer Beleimungsstation (2, 8) für die Holzlamellen (16), einer Sammelstation (3, 4, 5, 9) zum lagerichtig zueinander orientierten Anordnen der für eine Deckschichtdiele vorgesehenen Holzlamellen (16) zu einer Deckschicht-Anordnung (7), sowie einer Presse (11), in der die Holzlamellen (16) in der Deckschicht-Anordnung (7) mittels Druck- und Wärmeeinwirkung miteinander verleimt werden,
**dadurch gekennzeichnet,**
**dass** die Presse (11) eine kontinuierlich arbeitende Durchlaufpresse ist.

2. Anlage nach Anspruch 1,
**dadurch gekennzeichnet,**
**dass** die Presse (11) induktiv beheizbare Wärmeübertragungsmittel (12, 13) zum Einbringen der Prozesswärme in die Deckschicht-Anordnung (7) aufweist.

3. Anlage nach Anspruch 2,
**dadurch gekennzeichnet,**
**dass** die Presse (10) ein oben umlaufendes Förderelement (12) sowie ein unten umlaufendes Förderelement (13) aufweist, zwischen welchen die Deckschicht-Anordnung (7) hindurchgeführt wird.

4. Anlage nach mindestens einem der Ansprüche 1 bis 3,
**dadurch gekennzeichnet,**
**dass** die Presse (11) mit seitlichen, vertikal angeordneten Rollen oder Gleitelementen zur seitlichen Führung der Deckschicht-Anordnung (7) versehen ist.

5. Anlage nach mindestens einem der Ansprüche 1 bis 4,
**dadurch gekennzeichnet,**
**dass** die Sammelstation als Zusammenführungsvorrichtung (9) ausgebildet ist, die mit einer Anzahl von seitlich rechts und links der Deckschicht-Anordnung (7) im Wesentlichen trichterförmig angeordneten, aktivierbaren Vertikalrollen (10) oder Vertikalgleitelementen zur Querverdichtung der Holzlamellen (16) der Deckschicht-Anordnung (7) versehen ist.

6. Anlage nach Anspruch 5,
**dadurch gekennzeichnet,**
**dass** die Zusammenführungsvorrichtung (9) außerdem Horizontalrollen oder Horizontalgleitelemente zum horizontalen Ausrichten der Oberflächen der Deckschicht-Anordnungen (7) auf eine Bezugsebene aufweist.

7. Anlage nach einem der Ansprüche 5 oder 6,
**dadurch gekennzeichnet,**
**dass** die Zusammenführungsvorrichtung (9) angetriebene Fördermittel zum Längsverdichten der Deckschicht-Anordnungen (7) aufweist.

8. Anlage zum Herstellen von Deckschichtdielen, die jeweils aus mehreren, an ihren Längs- und/oder Stirnseiten aneinandergesetzten und miteinander verleimten Deckschicht-Holzlamellen zusammengesetzt sind, mit einem Lamellenmagazin (1) zum Bereithalten und geordneten Aufgeben von Holzlamellen (16) in Längsrichtung auf eine Förderstrecke (1, 2, 3), einer Sammelstation (3, 4, 5) zum lagerichtig zueinander orientierten Anordnen der für eine Deckschichtdiele vorgesehenen Holzlamellen (16) zu einer Deckschicht-Anordnung (7), sowie einer Presse (11), in der die Holzlamellen (16) der Deckschicht-Anordnung (7) mittels Druck- und Wärmeeinwirkung miteinander verleimt werden,
**dadurch gekennzeichnet,**
**dass** die Sammelstation eine Anschlagsvorrichtung (5) zum Stoppen der auf der Förderstrecke (1, 2, 3) angeförderten Holzlamellen (16) sowie eine in vorbestimmtem Abstand stromaufwärts der Anschlagsvorrichtung (5) angeordnete Sägeeinrichtung (4) zum Durchsägen der zuvorderst an der Anschlagsvorrichtung (5) anliegenden Holzlamellen (16) einer Deckschicht-Anordnung (7) aufweist.

9. Anlage nach Anspruch 8,
**dadurch gekennzeichnet,**
**dass** die Sammelstation eine Pufferstrecke (3) zum Erzeugen oder Beibehalten oder Regeln einer Lücke (17) zwischen einzelnen Gruppen von Holzlamellen (16), die jeweils für eine Deckschicht-Anordnung (7) vorgesehen sind, oder zwischen allen Holzlamellen enthält.

10. Verfahren zum Herstellen von Deckschichtdielen, die jeweils aus mehreren, an ihren Längs- und/oder Stirnseiten aneinandergesetzten und miteinander verleimten Deckschicht-Holzlamellen zusammengesetzt sind, wobei die Holzlamellen in einem Lamellenmagazin bereitgehalten und entsprechend einem erwünschten Erscheinungsbild oder der zur Verfügung stehenden Eingangslängen der Parkett-Deckschichtdielen in bestimmter Reihenfolge auf eine Förderstrecke gegeben werden, wonach die Holzlamellen in einer Sammelstation zumindest in Längsrichtung lagerichtig aneinanderliegend zu einer Deckschicht-Anordnung zusammengestellt werden und diese mittels einer Sägeeinrichtung auf das Soll-Längenmaß einer Deckschichtdiele abgelängt wird,
**dadurch gekennzeichnet,**
**dass** jeweils die vorderste Holzlamelle einer Deckschicht-Anordnung in der Sammelstation an einer Anschiagsvorricntung angehalten und in definiertem Abstand stromaufwärts der Anschlagsvorrichtung durchgesägt wird, wobei die Position des Trennschnitts anhand des Soll-Längenmaßes der durchgesägten Holzlamelle oder anhand der Soll-Längenmaße der für eine Deckschicht-Anordnung zusammengestellten Holzlamellen bestimmt wird.

11. Verfahren nach Anspruch 10,
**dadurch gekennzeichnet,**
**dass** zur Bestimmung der Position des Trennschnitts die Soll-Längenmaße derjenigen Holzlamellen, die nicht gesägt werden, sowie das Soll-Längenmaß des Reststücks der vordersten Holzlamelle zusammengerechnet werden und ein Soll-Längenmaß des abgesägten Stücks der vordersten Holzlamelle der nachfolgenden Deckschicht-Anordnung festgelegt wird, das der Differenz zum Soll-Längenmaß der Deckschicht-Anordnung entspricht.

12. Verfahren nach Anspruch 11,
**dadurch gekennzeichnet,**
**dass** ein Abstand zwischen der Sägeeinrichtung und der Anschlagsvorrichtung so eingestellt wird und/oder die Auswahl der vom Lamellenmagazin hintereinander auf die Förderstrecke aufgegebenenen Holzlamellen so erfolgt, dass sich das Soll-Längenmaß der Deckschicht-Anordnung aus der Summe der Soll-Längenmaße der nicht gesägten Holzlamellen, dem Soll-Längenmaß des Reststücks der vordersten Holzlamelle und dem Soll-Längenmaß des abgesägten Stücks der vordersten Holzlamelle der nachfolgenden Deckschicht-Anordnung ergibt.

13. Verfahren nach mindestens einem der Ansprüche 10 bis 12,
**dadurch gekennzeichnet,**
**dass** zwischen der jeweils vordersten, zu sägenden Holzlamelle einer nachfolgenden Deckschicht-Anordnung und der letzten Holzlamelle der vorangehenden Deckschicht-Anordnung eine Lücke erzeugt wird, oder zwischen allen Holzlamellen Lücken erzeugt werden, so dass die vorderste, zu sägende Holzlamelle der nachfolgenden Deckschicht-Anordnung nicht vor Abschluss des Sägevorgangs an der vor ihr transportierten Holzlamelle anstößt.

14. Verfahren nach mindestens einem der Ansprüche 10 bis 13,
**dadurch gekennzeichnet,**
**dass** die Holzlamellen einer Deckschicht-Anordnung in der Sammelstation stirnseitig aneinanderliegend, jedoch seitlich voneinander beabstandet bearbeitet, danach seitlich beleimt, und dann in einer Zusammenführungsvorrichtung als weiterer Sammelstation querverdichtet werden, um sie der Presse zuzuführen.

15. Verfahren nach mindestens einem der Ansprüche 10 bis 14,
**dadurch gekennzeichnet,**
**dass** die Deckschicht-Anordnungen in einer kontinuierlich arbeitenden Durchlaufpresse mit Druck und Wärme beaufschlagt werden, um die Holzlamellen miteinander zu verleimen.
